# EUROPEAN PATENT APPLICATION

(11) **EP 1 348 476 A2**
(43) Date of publication of application: **01.10.2003**
(21) Application number: 03425189.2
(22) Date of filing: 25.03.2003
(51) Int. Cl.: B01D 53/26

(54) **Moisture sorber device and process for the manufacture thereof**

(30) Priority: 26.03.2002 IT MI20020625
(71) Applicant: SAES GETTERS S.p.A., 20020 Lainate (Milano) (IT)
(72) Inventor: della Porta, Anna, 20121 Milano (IT)
(74) Representative: Adorno, Silvano

(57) **Abstract**

It is disclosed a moisture sorber device (20; 30; 40) of reduced thickness and high dimensional stability. It is also disclosed a process for the manufacture of this device.

## Description

The present invention relates to a device for sorbing moisture, having a low thickness and a high dimensional stability, and to a process for the manufacture thereof.

The water sorption is required for the correct working of numerous systems and electronic, microelectronic or optoelectronic devices: water sorbing systems are for example inserted in the housing of laser amplifiers used in telecommunications, as described in the patent application EP-A-720260. Another application is in the new flat screens based on organic light emitting diodes, generally known in the sector under the abbreviation OLEDs, which are used as luminous screens for cellular telephones, for stereo equipments, for car dashboards and the like; this type of screens and the problems related with the water inlet in the same are disclosed for example in the patent US 5,882,761.

In this applications, it is necessary that the moisture sorbing system does not loose particles, which could damage internal components of the electric device or interfere with its working. Moreover, since the constant tendency to miniaturize in this sector, it is generally required that the sorbing system is of reduced dimensions, and particularly has a reduced thickness, to occupy a volume as low as possible in the housing of the electronic device: for this purpose, it is also required that the sorbing system has a high dimensional stability, to avoid deformations or bulges inside the electronic device, which can locally modify the system dimensions.

Moisture sorbing systems of reduced thickness are disclosed for example in patents US 4,985,296 and US 5,078,909 and in the publication of the international patent application WO-A-01/88041. The systems of these patents comprise powders of desiccant materials, as zeolites or oxides of alkaline-earth metals, dispersed in a polymeric matrix. These systems cannot however contain high amounts of desiccant materials, so that the continuity of the polymeric matrix is sufficient to ensure mechanical stability to the whole. Furthermore, there is the risk of powder particles lost at the surface of the system.

The research publication RD 430061 and the international patent application PCT/IT01/00489 in the name of the applicant disclose moisture sorbing systems specific for OLEDs. These systems are formed of a part with a central hollow filled with a desiccant material, soldered at the edges to a water permeable membrane. In order to be able to ensure mechanical stability and planarity, these systems however cannot be manufactured in too reduced thicknesses.

The object of the present invention is to provide a moisture sorbing device of low thickness and high dimensional stability; a second object is to provide a process for the manufacture of this device.

These objects are achieved according to the present invention, which in a first aspect relates to a moisture sorbing device comprising:
- a first sheet having a multiplicity of passing holes, of such a material and thickness to give mechanical consistency to the device;
- a second sheet, continuous and capable of restraining solid particles, having a thickness generally inferior to that of the first sheet;
- a water-permeable membrane but capable of restraining solid particles, fixed on surface of the first sheet opposite to that whereon the second sheet is fixed;
- a moisture sorbing material with a water pressure equilibrium not higher than 10⁻² mbar at temperatures comprised between -40°C and 130°C, contained in the closed caves defined by the membrane, the second sheet and the first sheet at the holes of this last.

The invention will be described in the following with reference to the drawings wherein:
- Fig. 1 shows in partial cut out a moisture sorbing device of the invention;
- Fig. 2 shows schematically a sectional view of a screen of OLED type comprising a moisture sorbing device of the invention;
- Fig. 3 shows schematically the main steps of the manufacturing process of the device of the invention; and
- Fig. 4 shows schematically the main steps of the manufacturing process of a varying of the device of the invention.

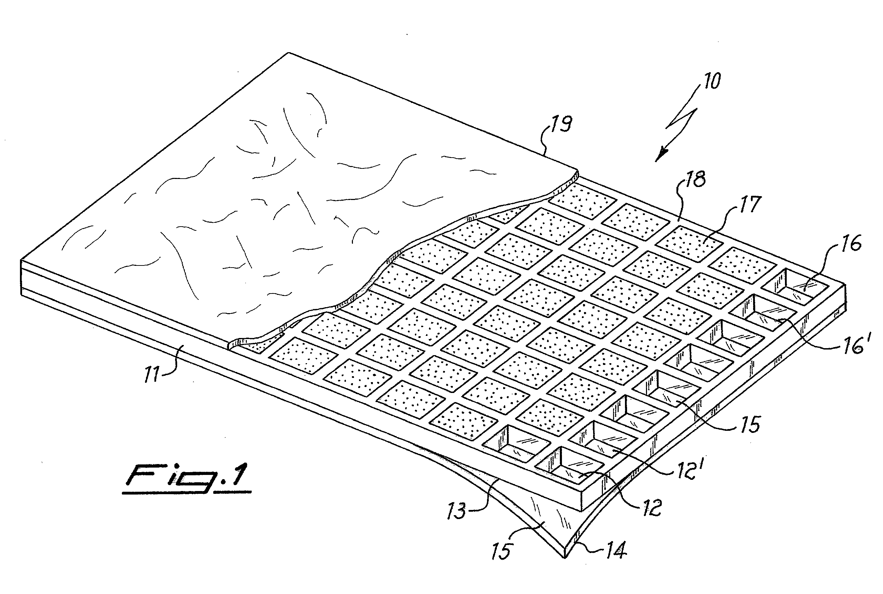

Figure 1 shows a moisture sorber device of the invention in its most general embodiment, in a partially cut out view. Device 10 is formed of a first sheet 11, which has a multiplicity of holes 12, 12',...; on the lower face, 13, of sheet 11 a second sheet, 14, is fixed in such a way that its upper face, 15, defines together with the holes in the first sheet a multiplicity of caves, 16, 16',...; the caves are filled with the moisture sorbing material, 17; on upper face, 18, of sheet 11 membrane 19 is fixed, in such a way to confine the moisture sorbing material 17 in caves 16, 16',..., allowing in the meantime the moisture to approach the same material.

Device 10 can find application in all the electronic devices mentioned before; in the remaining description the examples of utilization will be described with particular reference to the OLED screens, which represent one of the most important application thereof.

The first sheet, 11, can be carried out with any material which is easily manufacturable in sheets of thickness of 20 µm or more, which in these conditions has a good mechanical resistance and which is easy workable to obtain holes 12, 12', ...; for several applications, for example in the OLED, it is also preferable that the first sheet is carried out with a material having a low level of water degassing in the utilization conditions. This material can for example be a metal (preferred is the aluminum) or a polymer, both in the form of a continuous sheet and of a fabric or polymeric foam; in the case of utilization of polymeric material, preferred are the polyethylene (PE) or polyethylene terephthalate (PET), for their easy formability, lightness and the low cost.

The thickness of the first sheet, 11, must be the maximum available, in so far as the desired thickness of the final device allows and considering the thickness of the membrane and of the second sheet; this thickness is, in any case, generally at least the half, and preferably at least the 80% of the total thickness of the device of the invention. Besides the necessity to increase the mechanical consistency of the device, the reason to maximize the thickness of the first sheet is that it determines the height of the caves 16, 16',..., and as this height increases, obviously increases the amount of sorbing material which can be loaded in the device. The thickness of the device depends on its final application: for example, in the case of the utilization in an OLED, the required thickness is generally lower than 400 µm, and preferably lower than 200 µm. The thickness of sheet 11 will be consequently comprised between about 100 and 300 µm.

The second sheet, 14, is fixed to surface 13 of sheet 11 so that its upper surface, 15, forms the bottom of caves 16, 16', ...; this sheet can be carried out with the same materials of sheet 11. The thickness of sheet 14 will be generally not higher than 25%, and preferably lower than 10%, of the total thickness of device 10, but is preferably the minimum one which ensures a mechanical resistance enough to avoid the risk of breakages and loss of powders of the sorbing material during the manufacturing or the utilization of the device. In the case of OLEDs, the thickness of sheet 14 will be preferably comprised between about 3 and 50 µm.

The membrane, 19, is fixed to surface 18 of sheet 11, and has the function of restraining the particles of material 17 in the caves 16, 16',..., allowing, in the meantime, the moisture surrounding the device to come easily and quickly in contact with the sorbing material. To this purpose, the membrane must preferably have a water conductivity higher than 0,1 mg/(hour x cm²). Said membrane can be of type with homogeneous dimensions and distribution of holes; a similar membrane can be formed of a metallic screen, of a polymeric fabric or a micropierced metallic or polymeric sheet. Between these, for reasons of cost and lightness, the utilization of membranes of polymeric material is preferred. Otherwise, it is possible to use membranes with non uniform distribution and dimensions of holes, as for example membrane of non woven fabric. Typical non woven fabric membranes are those made up of polyethylene, for example high density (known in the sector as HPDE); membranes of this type are commercially available with the term Tyvek® (trade-mark registered by du Pont de Nemours).

The membrane must have holes not greater than 15 µm, to be able to restrain the powders of the sorbing material. The thickness of the membrane is generally not higher than 25%, and preferably lower than 10%, of the total thickness of device 10; analogously to sheet 14, this thickness is preferably the minimum which ensures a mechanical resistance enough to avoid the risk of loss of the sorbing material powders; in the case of a device 10 to be used in an OLED screen, the thickness of membrane 19 will be preferably comprised between about 10 and 50 µm.

Moisture sorbing material 17 can be any material which has a water equilibrium pressure lower than 10⁻² mbar in the whole field of utilization expected for a device of type 10 in electronic or optoelectronic applications, which is about between -40°C and 130°C. Among these materials, preferred are the oxides of alkaline-earth metals, such as CaO, SrO and BaO; particularly preferred is CaO because it does not mean safety or environmental problems during the manufacturing steps or in the digestion of electronic devices, besides its low cost. The sorbing material is commonly in the form of powder, with a granulometry generally comprised between 1 and 300 µm, and preferably comprised between 10 and 100 µm. It is possible to add powder of other materials to the sorbing material, for example small amounts of inert materials such as alumina, with the function of preventing the material from an excessive packing due to the water sorption, or of other gas sorbing materials, for example oxygen, hydrogen or carbon oxides.

The fixing between sheet 11 and sheet 14, and that between sheet 11 and membrane 19, can be carried out in any known way; for example, this fixing can be carried out by means of thermosoldering in the case in which the materials allow it, or by means of gluing, as better described in the following with reference to the process for the manufacture of the device of the invention.

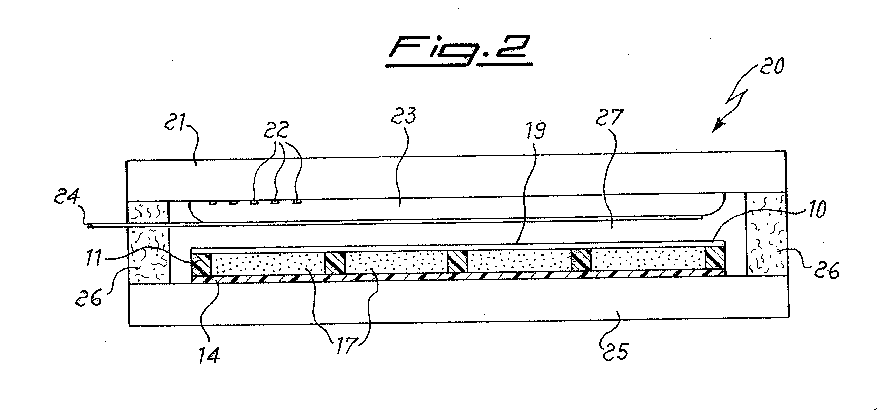

Figure 2 shows schematically a sectional view of an OLED screen 20 containing a moisture sorbing device of the invention, 10. Summarizing very much, an OLED is formed of a first transparent support 21, whereon the image is visualized, essentially planar and generally made up of glass or of a plastic polymer; a first series of transparent, linear and parallel to each other electrodes, 22, deposited on first support; a double layer, 23, of electroluminescent organic different materials, the former of which is an electron conductor and the latter is an electronic vacancies conducter, deposited on the first series of electrodes; a second series of linear and parallel to each other electrodes, 24, and with a orientation orthogonal to those of the first series, in contact with the upper part of the double layer of organic materials, in such a way that it is comprised between the two series of electrodes; and a not necessarily transparent second support, 25, which may be carried out with glass, metal or plastic, essentially planar and parallel to the first support and having generally the only function of closing and supporting the device. The two supports are fixed each other along the perimeter, generally by means of gluing with a glue 26, so that the active part of the structure (electrodes, electroluminescent organic materials) comes to be in a closed space, 27. The glue is however generally moisture-permeable, which can thus penetrate from outside in space 27. Device 10 is inserted in the OLED with membrane 19 directed towards space 27, and it is made adhere to support 25 so as to ensure the sorber device to keep a planar shape. Moreover, due to its internal structure made up of a multitude of small caves divided by portions of sheet 11, device 10 avoids also the problem of great accumulations of sorbing material which can locally modify the thickness and the risk that its parts come in contact with the organic double layer or the electrodes, damaging them. The number, the shape, the dimensions and the arrangement of the caves can be chosen at will according to the necessities of sorption which must be satisfied in the final application.

In a second aspect, the invention relates to a process for manufacturing a moisture sorbing device, which comprises the steps of:
- preparing a first sheet, of such a material and a thickness to be mechanically consistent;
- carrying out a multiplicity of holes on said first sheet;
- fixing on lower surface of the first sheet a member able to restrain solid particles, chosen between a water permeable membrane and a second continuous sheet, so as to form a multiplicity of caves at said holes;
- filling said caves with powder of a moisture sorbing material which has a water equilibrium pressure not higher than 10⁻² mbar at temperatures comprised between -40°C and 130°C;
- fixing to the upper surface of the first surface a member able to restrain solid particles, chosen between a water permeable membrane and a second continuous sheet different from the one fixed on the lower surface of the first sheet, so as to close said filled caves with the moisture sorbing material.

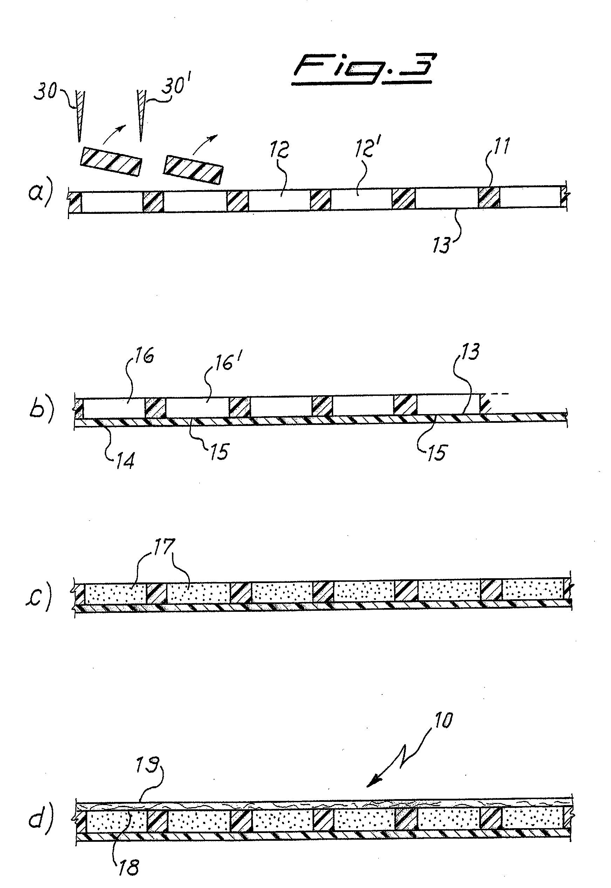

Figure 3 shows schematically the main steps of the process of the invention, with sectional views of the different members forming the device 10; in the drawing is exemplified the case in which at the lower surface of the first sheet is fixed the second continuous sheet, and at its upper surface is fixed the membrane, but it is also possible the opposite configuration. In step a, in the first sheet 11 are made holes 12, 12', ..., with a cutting operation, carried out with suitable tools 30, 30', ...; in the following step, **b,** the lower surface 13 of the first sheet 11 is made adhere to the upper surface 15 of the second continuous sheet, 14, so as to form caves 16, 16', ..., directed towards the upside; in step c the caves are filled to the brim with powder of sorbing material 17; the filling to the brim consists in introducing a suitable amount of powder material in the caves and in removing an eventual exceeding part of powder by "scraping" the surface of sheet 11 with a suitable blade; in step **d** on upper surface 18 of sheet 11 is then fixed membrane 19 so that material 17 is completely contained in closed spaces.

The process has been described with reference to the manufacturing of a single device 10 (illustrated as having three caves in the direction of the section of the drawing), but obviously in practice several devices of type 10 are produced simultaneously, starting from sheets of type 11, 14 and membrane 19 having dimensions multiple of those of device 10, manufacturing several devices in parallel and dividing them with a further cutting operation; otherwise, it is possible to manufacture several devices of type 10 with a continuous process, using tapes corresponding to sheets 11 and 14 and to membrane 19, passing them through suitable holes (12, 12') making stations, loading with powders and fixing, and dividing also in this case the single devices with a final cutting operation; these alternative processes, wherein devices of type 10 are manufactured in different pieces, are not exemplified in the drawings.

The fixing among members 11, 14 and 19 of device 10 can be carried out by means of thermosoldering in the case in which the two materials are both polymeric, and preferably equal; the thermosoldering is particularly easy when the material is polyethylene.

While the gluing allows to fix each other materials of any type, including the metals. More commonly used glues for these applications are the acrylic ones. In the case in which sheet 11, sheet 14 and membrane 19 are fixed one to the other by means of gluing, it is possible to use mono- or biadhesive sheets for manufacturing sheet 11 or sheet 14. Mono- or biadhesive sheets are well known and widely used in numerous technological applications. These sheets or tapes are generally formed of a support (a thin sheet of plastic material) on one or both the surfaces of which there is a layer of adhesive material. For example, the support can be carried out in PET, with thicknesses comprised between 4 and 500 µm, while the adhesive layers are carried out in acrylic materials with thicknesses from some microns up to some tens of microns. Upon each adhesive layer is further applied a temporary protection film, which is removed to expose the adhesive layer just before the gluing.

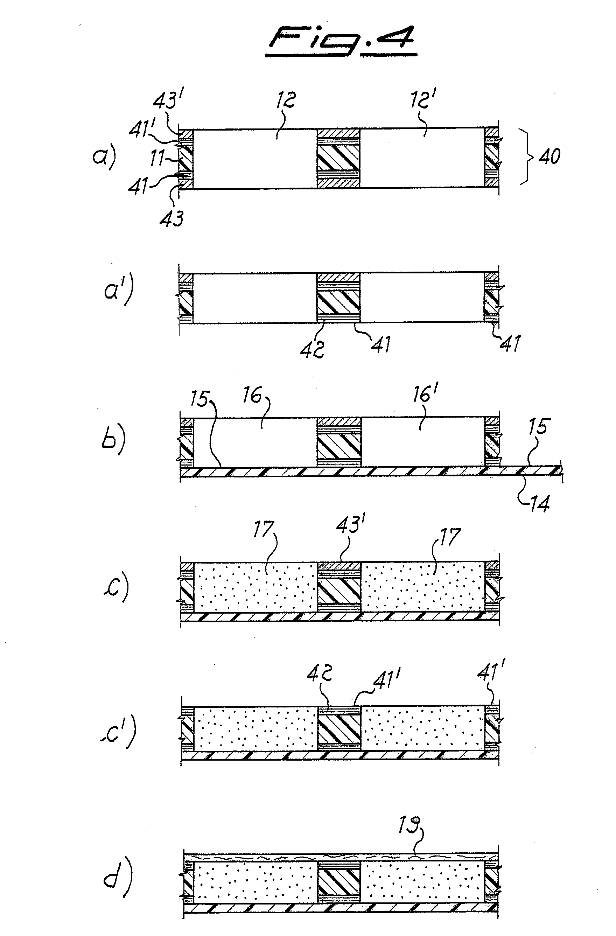

Figure 4 shows schematically with views analogous to those of figure 3, the main operations of a manufacturing process of a device 10 wherein to carry out layer 11 a biadhesive sheet 40 is used; also in this case the case in which the last step is the membrane fixing is exemplified, but this could be fixed to the lower surface of the first sheet to form the caves, and the second continuous sheet could be fixed to the upper surface of the first sheet as last step of the process. Biadhesive sheet 40 is formed of a support 11, on whose surfaces there are a first and a second layer, 40 and 41', of adhesive material 42, initially respectively sheltered by two films 43 and 43'. In this case, in step **a'** protective film 43 is removed, exposing layer 41 of adhesive material 42; in step **b**, the lower surface of sheet 40 is made adhere through adhesive layer 41 to upper surface 15 of sheet 14, thus forming caves 16, 16',..., upwardly directed; in step **c**, caves are filled with powder of sorbing material 17; in step **c'**, protective film 43' is removed, exposing layer 41' of adhesive material 42; in this case, the removal of film 43' helps also the elimination of the eventual traces of powder come out from caves 16, 16', ...; finally, in step **d** membrane 19 is fixed to upper surface of sheet 11, exploiting the parts of layer 41' which have not been removed during step **a**.

With the utilization of mono- or biadhesive sheets there are numerous possible process variants; for example, in the above described process it is possible to use a mono adhesive sheet instead of sheet 14, obviously with the adhesive layer facing the opposite part of surface 15, so as to have the adhesive which will be used to fix device 10 to the designed surface, for example support 25 in the case of an OLED, already prepared. Otherwise, it is possible to use a biadhesive sheet for sheet 14 and a monoadhesive sheet for sheet 11; in this case the adhesive layer on sheet 11 is obviously arranged on surface 18, directed towards membrane 19, for the adhesion with this, whilst adhesive layers on sheet 14 allow the adhesion of this to sheet 11 and of device 10 to the suitable surface in the final application.

Using mono- or biadhesive layers in the manufacture of several device (10) in parallel (large-sized sheet) or in continuous (sheets in form of tapes) as described before, instead of the cutting operations for dividing the single devices, it is possible to proceed with die-cutting operations. In these operations, all the layers except the protection film of the adhesive layer which is on the external surface of the second sheet are cut, so that it is a continuous support of the devices, particularly useful in the steps of packaging and transportation of the same (for example in the case of tapes, it is possible to have rolls carrying numerous devices 10); single devices can then be spaced from this support at the moment of utilization, exposing the adhesive layer and thus resulting already ready for the placement in the final housing, with procedures analogous to those known in the sector of autoadhesive labels.

In the case in which said mono- or biadhesive sheets are used to carry out sheet 11, these have preferably a thickness comprised between 100 and 600 µm; products of this type are sold by the Italian company Biesse with the catalogue numbers Goffrato 10, Goffrato 10OPP, Goffrato 20, Goffrato 20OPP and Cussion Blu (in this last case sheet 11 is made up of a polymeric foam), or by Tesa company with the catalogue numbers 4967, 4965 and 51965. Mono- or biadhesive sheets utilizable for carrying out sheet 14 are commercially available, for example by the Italian company Biesse with the catalogue number Bipol 12 AF, by the German company Tesa with different catalogue numbers among which 4983, 4973, by the Japanese company Nitto-Denko, with the catalogue number HJ-3160W, or by the Japanese company Teraoka with the catalogue number 707.

## Claims

1. A moisture sorbing device (10) comprising:
- a first sheet (11) which has a multiplicity of passing holes (12, 12', ...), of such a material and a thickness to give mechanical consistency to the device;
- a second sheet (14), continuous and capable of restraining solid particles, having a thickness generally lower than the one of the first sheet, fixed on one of surfaces (13) of the first sheet;
- a membrane (19) permeable to water but capable of restraining solid particles, fixed on surface (18) of the first sheet opposite to that whereon the second sheet is fixed;
- a moisture sorbing device (17) with a water equilibrium pressure not higher than 10⁻² mbar at temperatures comprised between -40°C and 130°C, contained in the closed caves formed by the membrane, the second sheet and the first sheet at the holes of this last.

2. A device according to claim 1 wherein said first sheet is carried out in a material chosen among a metal or a polymer.

3. A device according to claim 2 wherein said metal is aluminum.

4. A device according to claim 1 wherein said second sheet is carried out in a material chosen between a metal and a polymer.

5. A device according to claim 1 wherein said membrane has a water permeability higher than 0,1 mg/(hour x cm²).

6. A device according to claim 1 wherein said membrane is chosen among metallic screens, polymeric fabrics, metallic o micropierced polymeric sheets and non woven fabric.

7. A device according to claim 1 wherein said moisture sorbing material (17) is chosen among CaO, SrO and BaO.

8. A process for manufacturing a device of claim 1 comprising the following steps:
- preparing a first sheet (11), of such a material and a thickness to be mechanically consistent;
- carrying out a multitude of holes (12, 12', ...) on said first sheet;
- fixing on lower surface (13) of the first sheet (11) a member able to retain solid particles, chosen between a water permeable membrane (19) and a second continuous sheet (14), so as to form a multitude of caves (16, 16', ...) at said holes;
- filling said caves with powder of a moisture sorbing material (17) which has a water equilibrium pressure not higher than 10⁻² mbar at temperatures comprised between -40°C and 130°C;
- fixing to the upper surface (18) of the first surface a member able to restrain solid particles, chosen between a water permeable membrane (19) and a second continuous sheet (14) different from the one fixed on the lower surface of the first sheet, so as to close said filled caves with the moisture sorbing material.
